(19) **Europäisches Patentamt**

**European Patent Office**

**Office européen des brevets**

(11) Veröffentlichungsnummer: **0 566 922 A1**

(12) # EUROPÄISCHE PATENTANMELDUNG

(21) Anmeldenummer: **93105608.9**

(22) Anmeldetag: **05.04.93**

(51) Int. Cl.5: **B65D 85/00**

(30) Priorität: **21.04.92 DE 4213009**

(43) Veröffentlichungstag der Anmeldung:
**27.10.93 Patentblatt 93/43**

(84) Benannte Vertragsstaaten:
**BE CH DE ES IT LI NL**

(71) Anmelder: **BASF Aktiengesellschaft**
**Carl-Bosch-Strasse 38**
**D-67063 Ludwigshafen(DE)**

(72) Erfinder: **Fuchs, Hugo, Dr.**
**Egellstrasse 28**
**W-6700 Ludwigshafen(DE)**
Erfinder: **Ritz, Josef, Dr.**
**Osloer Weg 8**
**W-6700 Ludwigshafen(DE)**
Erfinder: **Neubauer, Gerald, Dr.**
**Mozartstrasse 24**
**W-6940 Weinheim(DE)**

(54) **Wiederverwertbare Gebinde aus Polyamid-6 als Verpackungsmittel für Caprolactam.**

(57) Verfahren für die Verpackung von Caprolactam, dadurch gekennzeichnet, daß man als Verpackung Gebinde aus Polyamid-6 einsetzt.

EP 0 566 922 A1

Caprolactam wird in großem Umfang für die Herstellung von Polyamid-6 verwendet.

Das bei der Beckmann'schen Umlagerung von Cyclohexanonoxim entstehende Caprolactam wird nach bekannten Methoden durch z.B. Extraktion und Destillation gereinigt. Große Mengen Caprolactam werden im flüssigen Zustand in beheizbaren Tankzügen, Schienenkesselwagen usw. transportiert.

Ein großer Teil des Caprolactams wird aber z.B. auf Schuppenwalzen verfestigt und als Caprolactam Schuppen versandt.

Die Verpackung der Caprolactamschuppen erfolgt üblicherweise in Gebinden mit einer Wasserdampfsperre, um Einflüsse von Feuchtigkeit zu vermeiden. Solche Gebinde sind beispielsweise Säcke auf Polyethylen oder andere Gebinde mit feuchtigkeitsundurchlässigen Einlagen.

Diese Art der Verpackung hat den Nachteil, daß eine Wiederverwertbarkeit der beispielsweise Polyethylensäcke nur schwer gegeben ist. Die Säcke sind durch ihren Inhalt Caprolactam "verunreinigt". Einer Wiederverwertbarkeit müßte eine aufwendige Reinigung vorausgehen. Als Alternative hierzu bliebe noch die Verbrennung unter Rückgewinnung der Energie übrig.

Es war deshalb Aufgabe der vorliegenden Erfindung, Verpackungsmittel für Caprolactam in Schuppen zu finden, die ohne großen Aufwand und ohne Reinigung einer Wiederverwendung als Nylon Rohstoff zugeführt werden können.

Diese Aufgabe wird gelöst durch Verwendung von Gebinden aus Polyamid-6 mit einem sehr geringen Gasdurchgangsvermögen, insbesondere gegen Sauerstoff. Als vorteilhaft hat es sich erwiesen, zwei verschiedene Materialien für die Gebinde zu verwenden.

So soll das Caprolactam enthaltende Gebinde aus Polyamid-6 bestehen. Als Übersäcke können Säcke z.B. aus Polyethylen, Polypropylen- oder Polyethylenbändchengewebe, aber auch Gebinde aus Papiermassen ein- oder mehrlagig, aus Vliesen oder Geweben eingesetzt werden. Die Auswahl der Gebinde für die jeweilige Verpackungsform richtet sich nach der erforderlichen Formstabilität und den erforderlichen mechanischen Eigenschaften gegenüber Verformungen beim Transport.

Unter Papiermassen sind zu verstehen Papiere, Kartone oder Pappen. Solche Papiermassen werden erzeugt aus Zellstoff, der durch Aufschluß von Holz, Stroh oder anderen Zellstoff enthaltenden Rohstoffen gewonnen wurde. Geeignete Papiermassen sind auch erhältlich durch Verarbeitung von Holzschliff oder Wiederaufarbeitung von Papieren, Kartonen oder Pappen (sog. Altpapier). Die Papiermassen können die üblichen Zusatzstoffe wie Leimungsmittel, Füllmittel oder Farbe enthalten. Geeignete Papiere sind beispielsweise Kraftpapier oder gekrepptes Kraftpapier. Geeignete Pappen sind Vollpappen, wie Graupappe, Holzpappe oder Starkpappe, ferner Wellpappe, insbesondere mehrlagige Starkwellpappen. Geeignete Kartonsorten sind beispielsweise gegautschte und nichtgegautschte Kartonsorten, insbesondere Braunholzkarton aus braunem Holzschliff und Chromoersatzkarton. Geeignete Papiermassen werden beispielsweise beschrieben in Ullmanns Encyklopädie der technischen (Chemie 1957), Band 8, Seiten 535 bis 236, sowie Band 11, (1960) Seiten 144 bis 148.

Andere geeignete flächige Gebilde sind Vliese, die durch unregelmäßige Ablagerung von Endlosfäden, wie Regeneratcellulose oder Stapelfasern, z.B. Zellstoff erhältlich sind. Solche Vliese werden dann üblicherweise mit Bindemitteln verfestigt.

Weitere geeignete flächige Gebilde sind Gewebe, die aus gesponnenen Fasern wie Baumwolle, Zellwolle, Jute oder wiederaufgearbeiteten Geweben erhalten werden. Solche Gewebe werden vorteilhaft für die Herstellung von Säcken verwendet.

Es versteht sich, daß die flächigen Gebilde so beschaffen sein müssen, daß sie möglichst wenig Abrieb aufweisen, um eine Verunreinigung des zu transportierenden Caprolactams zu vermeiden.

Als besonders vorteilhaft hat sich die Verwendung von flächigen Gebilden (Säcke) aus Polyamid-6 allein oder aber in Verbindung mit einem Übersack aus Polyethylen herausgestellt.

Sofern Polyamid-6-Säcke allein verwendet werden, ist ein Transport im Container, der das Eindringen von Feuchtigkeit verhindert und gegen mechanische Beschädigung schützt, von besonderem Vorteil.

Ein Vergleich der möglichen Materialien, die in Kombination mit einem Polyamid-6 Sack in Frage kommen, zeigt die Tabelle.

Die verwendeten Polyamid-6-Säcke können nun nach der Entleerung ohne Reinigung z.B. für die Herstellung von Produkten für den Werkzeugsektor, Zahnräder, Dübel, Formteile, Verpackungsfolien usw. verwendet werden. Bei der Verarbeitung verdampft das an der Folie haftende Caprolactam und kann so zurückgewonnen werden.

Eine weitere Möglichkeit besteht in der Aufarbeitung des Polyamid-6-Verpackungsmaterials zu monomerem Caprolactam. Hierzu wird das Material aufgeschmolzen und in Gegenwart von z.B. Phosphorsäure, bei Temperaturen um 300°C mit überhitztem Wasserdampf behandelt. Mit dem Wasserdampf wird das erhaltene Caprolactam ausgetragen und kann nach bekannten Reinigungsverfahren aufgearbeitet werden.

Ein solches Verfahren wird in CAV (1973) Juni, Seiten 95 bis 97, oder in DE 95 07 26 beschrieben.

Bei der Verwendung von Polyamid-6-Säcken mit Übersäcken z.B. aus Polyethylen, können diese, da sie nicht durch Caprolactam kontaminiert wurden, auf bekannte Weise ohne weitere Reinigung ebenfalls einer Wiederverwertung zugeführt werden.

In der Tabelle werden unter den Nummern 1 bis 5 für die Durchführung des erfindungsgemäßen Verfahrens geeignete Verpackungsmittel mit ihren technischen Kenngrößen aufgeführt.

Wie aus dieser Tabelle hervorgeht, eignet sich für eine Verpackung für Caprolactam ganz besonders eine Kombination von Polyethylen und Polyamid-6.

Während die Wasserdampfdurchlässigkeit bei Polyamid-6 bezogen auf eine 100-$\mu$m-Folie, bei 15 bis 16 g/m$^2$ x d liegt, werden bei Polyethylenfolien gleicher Foliendicke Werte von nur 0,4 bis 1,90, je nach dem, ob Polyethylenfolien aus HDPE oder LDPE verwendet werden, gefunden.

Umgekehrt ist die Sauerstoffdurchlässigkeit bei Polyamid-6, ebenfalls auf eine 100-$\mu$m-Folie bezogen, 6 bis 7, während sie bei Polyethylen bei 600 bis 2 000 cm$^3$/m$^2$ x d x bar liegt.

Eine Verpackung für Caprolactam ist somit besonders günstig, wenn ein Übersack aus Polyethylen und ein Innensack aus Polyamid-6 verwendet wird.

Der Polyethylensack schützt somit das Caprolactam vor Feuchtigkeit, während der Polyamid-6-Sack vor dem Eindringen von Luftsauerstoff schützt.

| Verpackungsmittel | Flächengewicht g/m² | Wasseraufnahmevermögen bei 23°C, 93 % rel. Luftfeuchte in 48 Stunden Gew.% | Wasserdampfdurchlässigkeit g/m² x d | Sauerstoffdurchlässigkeit $\frac{cm^3}{m^2 \times d \times bar}$ $O_2$ | Scherfestigkeit p/cm² |
|---|---|---|---|---|---|
| 1 Polyamidfolie | 42 | 3 | 15-16 | 6-7 | 146 |
| 2 Polyethylenfolie | 288 | 0,1 | 0,4[1]-1,0[2] | 600[1]-2000[2] | 186 |
| 3 Wellpappe | 776 | 15 | 375 | | 15,3 |
| 4 Papiersack aus Kraftpapier 4-lagig | 281 | 12,5 | 810 | | 14,8 |
| 5 Papiersack aus Kraftpapier 6-lagig | 432 | 13,3 | 506 | | 14,2 |

LDPE[2] und HDPE[1] bezogen auf eine Foliendicke von jeweils 100 µm

**Patentansprüche**

1. Verfahren für die Verpackung von Caprolactam, dadurch gekennzeichnet, daß man als Verpackung Gebinde aus Polyamid-6 einsetzt.

4

2. Verfahren nach Anspruch 1, dadurch gekennzeichnet, daß man einen Übersack aus Polyethylen einsetzt.

3. Verfahren nach Ansprüchen 1 und 2, dadurch gekennzeichnet, daß man das Polyamid-Gebinde ohne vorhergehende Reinigung zu Polyamidformteilen verarbeitet, und das anhaftende Caprolactam zurückgewinnt.

4. Verfahren nach den Ansprüchen 1 bis 3, dadurch gekennzeichnet, daß man das Polyamid-Gebinde durch Depolymerisation zu monomerem Caprolactam verarbeitet.

Europäisches
Patentamt

**EUROPÄISCHER RECHERCHENBERICHT**

Nummer der Anmeldung

EP    93 10 5608

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DATABASE WPI<br>Week 7933,<br>Derwent Publications Ltd., London, GB;<br>AN 79-60388B<br>& JP-A-54 083 596 (UBE INDUSTRIES KK) 3. Juli 1979<br>* Zusammenfassung * | 1,2 | B65D85/00 |
| Y | --- | 3,4 | |
| D,Y | DE-C-950 726 (VEREINIGTE GLANZSTOFF-FABRIKEN AG)<br>* das ganze Dokument *<br><br>----- | 3,4 | |

| RECHERCHIERTE SACHGEBIETE (Int. Cl.5) |
|---|
| B65D |

Der vorliegende Recherchenbericht wurde für alle Patentansprüche erstellt

| Recherchenort | Abschlußdatum der Recherche | Prüfer |
|---|---|---|
| BERLIN | 30 JUNI 1993 | SMITH C. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................................................
& : Mitglied der gleichen Patentfamilie, übereinstimmendes
    Dokument

EPO FORM 1503 03.82 (P0403)